# EUROPÄISCHE PATENTSCHRIFT

(11) **EP 0 669 154 B1**
(45) Veröffentlichungstag und Bekanntmachung des Hinweises auf die Patenterteilung: **26.03.1997**
(21) Anmeldenummer: 95100536.2
(22) Anmeldetag: 17.01.1995
(51) Int. Cl.: B01D 46/42, B01D 46/24, B01D 29/15

(54) **Rotationsluftdüse zum Reinigen von Filterpatronen**
A rotating air nozzle for cleaning filter cartridges
Buse à air rotative pour la régénération des cartouches filtrantes

(30) Priorität: 25.02.1994 DE 4406124
(43) Veröffentlichungstag der Anmeldung: 30.08.1995
(73) Patentinhaber: KNECHT FILTERWERKE GMBH, D-70376 Stuttgart (DE)
(72) Erfinder: Manz, Rolf, Dr., D-74613 Öhringen (DE); Obernosterer, Gerhard, D-74613 Öhringen-Ohrnberg (DE); Quaas, Johannes, D-74626 Bretzfeld (DE)
(74) Vertreter: Pfusch, Volker, Dipl.-Ing.

(56) Entgegenhaltungen:
- GB-A- 662 358
- US-A- 4 309 063

## Beschreibung

Die Erfindung betrifft eine Rotationsluftdüse zum Reinigen von Filterpatronen mit den Merkmalen nach dem Oberbegriff des Anspruchs 1.

Eine derartige Rotationsluftdüse ist aus der DE-A-41 09 734 bekannt, bei der auf einem feststehenden, zur Zuführung der Druckluft dienenden Zentralrohr ein drehbares Lager vorgesehen ist, in das entsprechend geformte Düsenrohre einmünden. Die an ihrem dem Lager entgegengesetzten Ende mit Stopfen versehenen Düsenrohre weisen zur Abreinigung der Filterpatrone durch Anblasen entsprechende Düsenöffnungen auf. Eine solche Rotationsluftdüse befriedigt nicht ohne weiteres hinsichtlich Lagerreibung und Wirksamkeit.

Nach der GB-A-662 358 sind zwar bereits zwei Kugellager zur Lagerung einer Rotationsluftdüse auf einem Standrohr vorgesehen. Diese Lager bilden jedoch im Unterschied zu der Erfindung kein Zentrallager. Darüber hinaus weisen jene Kugellager keine Dichtscheiben und ebensowenig Entlüftungs-Aussparungen in ihren Aufnahmen auf.

Aus der US-A-4,309,063 ist es lediglich bekannt, den geschmierten Lagerraum von Kugellagern nach außen zu dichten.

Problem der vorliegenden Erfindung ist es daher, eine Rotationsluftdüse zu finden, bei der Lagerreibung und Wirksamkeit der Abreinigungsvorrichtung verbessert ist.

Gelöst wird dieses Problem mit einer Rotationsluftdüse mit den Merkmalen nach dem Kennzeichen des Anspruchs 1.

Vorteilhafte Ausgestaltungen der Erfindung sind in den Unteransprüchen enthalten.

Die Erfindung ist anhand eines bevorzugten, in der Zeichnung dargestellten Ausführungsbeispiels näher erläutert.

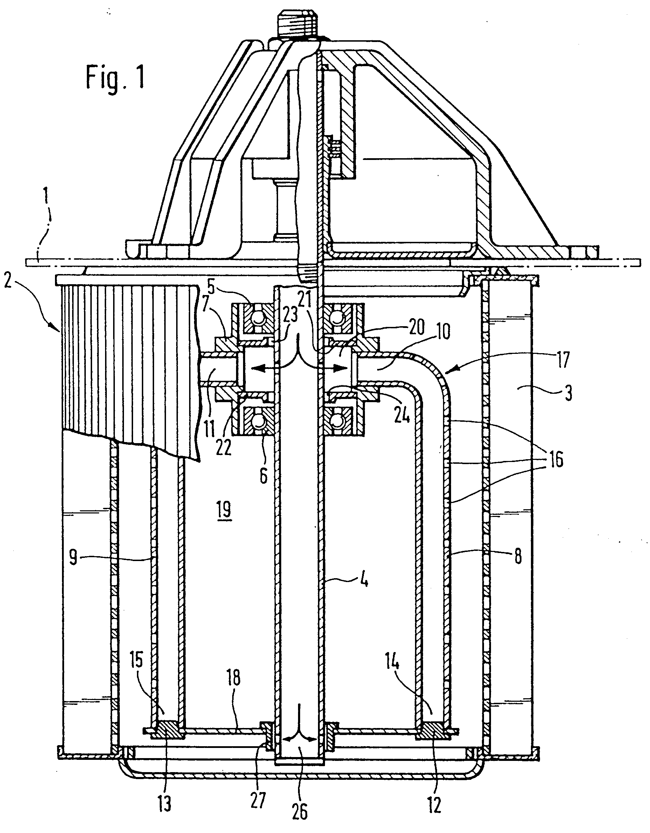

Es zeigen
- Fig. 1: eine Filterpatrone mit erfindungsgemäßer Rotationsluftdüse in Seitenansicht teilweise im Schnitt

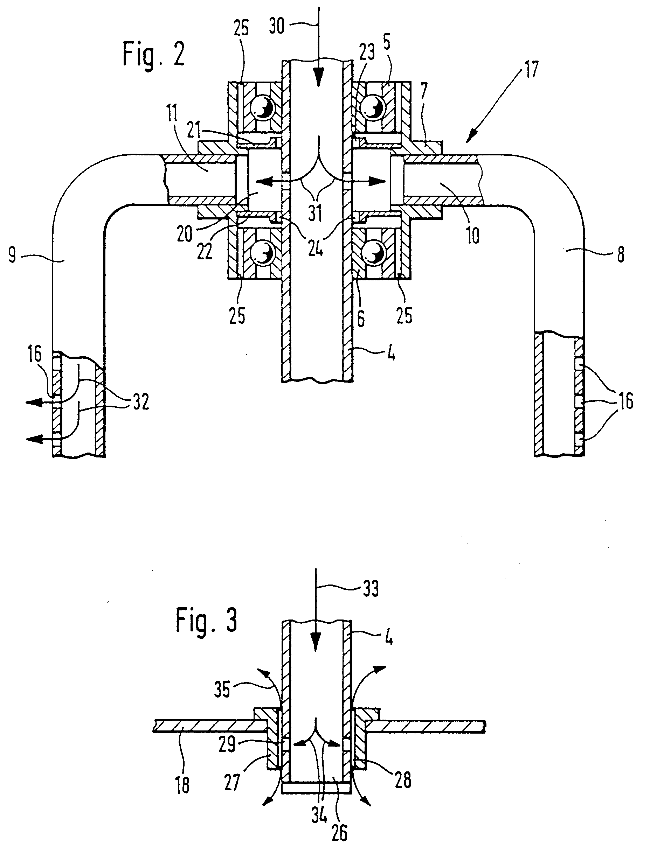

- Fig. 2: eine vergrößerte Ansicht der Zentrallagerstelle im Schnitt
- Fig. 3: eine vergrößerte Ansicht der weiteren Lagerstelle im Schnitt.

In einem (angedeuteten) Filtergehäuse 1 ist eine Filterpatrone 2 mit ihrem Filterelement 3 festgelegt.

Auf einem hohlen, die Druckluft zum Abreinigen des Filterelementes 3 zuführenden Zentralrohr 4 sind zwei Kugellager 5, 6 drehbar gelagert, wobei jeweils der Innenring des Kugellagers 5, 6 fest auf dem Zentralrohr 4 sitzt und der Außenring in einer Aufnahme 7 gelagert ist. In die Aufnahme 7 münden diametral entgegengesetzt zwei Düsenrohre 8, 9 mit ihrem ersten offenen Endbereich 10, 11. In einem sich daran zum zweiten Ende hin anschließenden durch Stopfen 12, 13 geschlossenen Bereich 14, 15 erstrecken sich die Düsenrohre 8, 9 geradlinig parallel zur Achse des Zentralrohres 4. Der zuletzt genannte geradlinige Bereich umfaßt den größten Teil der Gesamtlänge der Düsenrohre 8, 9, die hier in Richtung des Filterelementes 3 weisende Düsenöffnungen 16 besitzen, die im wesentlichen radial zur Achse des Zentralrohres 4 so ausgerichtet sind, daß der von der austretenden Luft resultierende Rückstoß die gewünschte Rotation der Rotationsluftdüse 17 bewirkt. Die beiden Düsenrohre 8, 9 sind an ihrem geschlossenen Bereich 14, 15 über eine Strebe 18 miteinander verbunden.

Um insbesondere bei den fettgeschmierten Kugellagern 5, 6 ein Austreten von Schmierfett in den Reinraum 19 der Filterpatrone 2 zu verhindern, muß der im Zentralrohr 4 anstehende hohe Druck von ca. 5 bar reduziert werden. Hierzu wird angrenzend an den Druckraum 20 zwischen Kugellager 5, 6 und Druckraum 20 jeweils eine Dichtscheibe 21, 22 vorgesehen, die einerseits an der Aufnahme 7 anliegt und andererseits zum Außenumfang des Zentralrohres 4 einen Dichtspalt 23, 24 aufweist (berührungslose Dichtung), der bewirkt, daß in den Kugellagern 5, 6 ein verminderter Druck von kleiner 0,1 bar ansteht. Die in die Kugellager 5, 6 eindringende Luft wird durch auf dem Umfang der Aufnahme 7 verteilt angeordnete Aussparungen 25 in den Reinraum 19 abgeleitet, so daß eine Entlastung der Kugellager 5, 6 von der Druckluft gewährleistet und ein Eindringen von Staub vermieden ist.

Bei Fiterpatronen mit langer abzureinigender Filterfläche ist eine Rotationsluftdüse mit langem Zentralrohr und langen Düsenrohren notwendig, wobei zur besseren Führung zusätzlich zu einem Zentrallager am geschlossenen Ende 26 des Zentralrohres 4 ein weiteres Lager 27 vorzusehen ist. Dieses Lager 27 ist als pneumatisches Gleitlager so ausgebildet, daß es zwischen seinem inneren Umfang und dem Zentralrohr 4 einen Spalt 28 aufweist, der über Bohrungen 29 im Zentralrohr 4 mit Druckluft beaufschlagt wird. Das Gleitlager 27 ist mit der Strebe 18 fest verbunden.

Der Strömungsweg der Druckluft ist durch die Pfeile 30 - 35 angezeigt, wobei einerseits 30 auf die Zuführung, 31 auf die Verteilung in die Düsenrohre, 8, 9 und 32 auf den Austritt aus den Düsenöffnungen 16 Bezug nimmt und andererseits 33 auf die Druckluft im Zentralrohr 4, 34 auf die Verteilung in Richtung auf die Bohrungen 29 und 35 auf den Austritt aus dem Spalt 28 des pneumatischen Gleitlagers 27 hinweist.

Durch eine derartige Luftführung wird ein Eindringen von Staubpartikeln einerseits in die Kugellager 5, 6 und andererseits in den Spalt 28 des Gleitlagers 27 verhindert.

Mit einer derartig ausgebildeten Rotationsluftdüse wird auf konstruktiv einfache Weise eine Verringerung der Lagerreibung erreicht und die Wirksamkeit der Abreinigungsvorrichtung des Staubabscheiders verbessert.

## Patentansprüche

1. Rotationsluftdüse mit einem zentralen Drehlager auf einem als Druckluftzufuhr dienenden in der Drehachse der Rotationsluftdüse liegenden, feststehenden Zentralrohr (4), aus dem durch das zentrale Lager Druckluft zum Reinigen von Filterpatronen (2) durch Anblasen der Patroneninnenfläche in als Stauräume ausgebildete Bereiche der Rotationsluftdüse eingeleitet wird,
**gekennzeichnet durch die Merkmale**
- das zentrale Lager umfaßt zwei axial beabstandete Kugellager (5, 6),
- die Kugellager (5, 6) sind auf ihrer jeweils der Druckluft zugewandten axialen Stirnseite durch eine Dichtscheibe (21, 22) geschützt,
- die jeweilige Dichtscheibe (21, 22) weist radial innen zwischen dem Innenring der Kugellager (5, 6) und dem Zentralrohr (4) einen Dichtspalt (23, 24) auf,
- die Kugellager (5, 6) sitzen in Aufnahmen (7) mit Entlüftungs-Aussparungen (25), die die an die axialen Stirnseiten eines Kugellagers (5, 6) angrenzenden Räume miteinander verbinden.

2. Rotationsluftdüse nach Anspruch 1,
**dadurch gekennzeichnet**,
daß an einem Ende (26) des Zentralrohres (4) ein weiteres Lager (27) vorgesehen ist, das als Gleitlager ausgebildet zwischen sich und dem Zentralrohr (4) einen Spalt (28) aufweist, der über Bohrungen (29) im Zentralrohr (4) mit Druckluft beaufschlagbar ist.

## Claims

1. Rotating air nozzle with a central pivot bearing on a stationary central tube (4) which serves as a compressed air supply, is located in the axis of rotation of the rotating air nozzle and from which compressed air for cleaning filter cartridges (2) by blowing the internal surface of the cartridge is introduced through the central bearing into regions of the rotating air nozzle designed as retaining chambers, characterised by the features
- the central bearing comprises two axially spaced ball bearings (5, 6),
- the ball bearings (5, 6) are protected at their respective axial end face turned toward the compressed air by a sealing disk (21, 22),
- the respective sealing disk (21, 22) has a sealing gap (23, 24) radially inwardly between the inner race of the ball bearings (5, 6) and the central tube (4),
- the ball bearings (5, 6) rest in sockets (7) with vents (25) which connect the chambers adjoining the axial end faces of a ball bearing (5, 6) to one another.

2. Rotating air nozzle according to claim 1, characterised in that a further bearing (27) is provided at one end (26) of the central tube (4), this bearing (27) being designed as a ball bearing and having, between itself and the central tube (4), a gap (28) which can be loaded with compressed air via bores (29) in the central tube (4).

## Revendications

1. Buse à air rotative comportant un palier rotatif central placé sur un tube central stationnaire (4), qui sert à l'alimentation en air comprimé, se situe dans l'axe de rotation de la buse à air, et à partir duquel est injecté, par le palier central, de l'air comprimé pour régénérer par soufflage la surface interne de cartouches filtrantes (2), dans des zones de la buse à air réalisées sous forme d'espaces de refoulement, caractérisée en ce que:
- le palier central comporte deux roulements à billes (5, 6) distants dans le sens axial,
- les roulements à billes (5, 6) sont protégés par un disque d'étanchéité (21, 22) sur chacun de leurs côtés frontaux axiaux, tournés vers l'air comprimé,
- le disque d'étanchéité respectif (21, 22) présente, dans le sens radial interne, une fente d'étanchéité (23, 24) entre la bague intérieure des roulements à billes (5, 6) et le tube central (4),
- les roulements à billes (5, 6) reposent dans des logements (7) munis d'évents (25), qui relient entre eux les espaces limitrophes aux côtés frontaux axiaux d'un roulement à billes (5, 6).

2. Buse à air rotative suivant la revendication 1, caractérisée en ce qu'une extrémité (26) du tube central (4) comporte un autre palier (27), réalisé sous forme de palier lisse et présentant entre lui et le tube central (4) une fente (28), qui peut être alimentée en air comprimé par des trous (29), prévus dans le tube central (4).
